# EUROPÄISCHE PATENTSCHRIFT

(11) **EP 4 021 766 B1**
(45) Veröffentlichungstag und Bekanntmachung des Hinweises auf die Patenterteilung: **14.08.2024**
(21) Anmeldenummer: 20753692.1
(22) Anmeldetag: 29.07.2020
(51) Int. Cl.: B60R 21/261

(54) **DEFLEKTOR FÜR EINEN DIFFUSOR EINES GASGENERATORS, DIFFUSOR-DEFLEKTOR BAUGRUPPE MIT EINEM SOLCHEN DEFLEKTOR, GASGENERATOR MIT EINER SOLCHEN DIFFUSOR-DEFLEKTOR BAUGRUPPE, HERSTELLUNGSVERFAHREN UND MONTAGEVERFAHREN**
DEFLECTOR FOR A DIFFUSER OF A GAS GENERATOR, DIFFUSER-DEFLECTOR ASSEMBLY HAVING SUCH A DEFLECTOR, GAS GENERATOR HAVING SUCH A DIFFUSER-DEFLECTOR ASSEMBLY, PRODUCTION METHOD AND INSTALLATION METHOD
DÉFLECTEUR POUR UN DIFFUSEUR DE GÉNÉRATEUR DE GAZ, MODULE DIFFUSEUR-DÉFLECTEUR DOTÉ D'UN TEL DÉFLECTEUR, GÉNÉRATEUR DE GAZ DOTÉ D'UN TEL MODULE DIFFUSEUR-DÉFLECTEUR, PROCÉDÉ DE FABRICATION ET PROCÉDÉ DE MONTAGE

(30) Priorität: 27.08.2019 DE 102019122989
(43) Veröffentlichungstag der Anmeldung: 06.07.2022
(73) Patentinhaber: ZF Airbag Germany GmbH, 84544 Aschau a. Inn (DE)
(72) Erfinder: WEBER, Bernd, 84513 Erharting (DE)
(74) Vertreter: ZF Patentabteilung - DIPS
(86) Internationale Anmeldenummer: PCT/EP2020/071411
(87) Internationale Veröffentlichungsnummer: WO 2021/037470

(56) Entgegenhaltungen:
- DE-A1- 102006 041 611
- DE-A1- 102008 063 789
- DE-U1- 20 310 575

## Beschreibung

Die Erfindung betrifft einen Deflektor für einen Diffusor eines Gasgenerators gemäß dem Oberbegriff des Patentanspruchs 1. Die Erfindung betrifft weiterhin eine Diffusor-Deflektor Baugruppe eines Gasgenerators mit einem solchen Deflektor. Ferner betrifft die Erfindung einen Gasgenerator mit einer solchen Diffusor-Deflektor Baugruppe. Die Erfindung befasst sich außerdem mit einem Gassackmodul, das einen solchen Gasgenerator aufweist. Weiterhin zeigt die Erfindung ein Verfahren zum Herstellen eines solchen Deflektors und ein Montageverfahren eines solchen Deflektors auf einem Diffusor eines Gasgenerators.

Aus der DE 103 18 133 A1 ist ein Gehäuse zum Aufsetzen auf einen Gasgenerator, insbesondere auf einen endseitigen Diffusor des Gasgenerators, bekannt, welches mit zwei Gasabströmkanälen ausgebildet ist. Dieses Gehäuse stellt einen Deflektor mit einem im Wesentlichen rohrförmigen Deflektorgrundkörper und einer damit verbundenen Gasabströmvorrichtung dar.

Der bekannte Deflektor kann als Kappe direkt auf einen Gasgenerator aufgesetzt werden. Es besteht Bedarf an einem Deflektor, der einfach und kostengünstig hergestellt werden kann und mit vorhandenen Diffusoren kompatibel ist.

Aus der Druckschrift DE 10 2008 063 789 A1 ist ein Deflektor für einen Diffusor eines Gasgenerators bekannt mit einem im Wesentlichen rohrförmigen Deflektorgrundkörper und einer damit verbundenen Gasabströmvorrichtung, wobei die Gasabströmvorrichtung eine im Wesentlichen rechteckige Grundfläche und zwei Ausströmbereiche an sich gegenüberliegenden Seitenwänden aufweist, so dass ein Gas im Wesentlichen in entgegengesetzte Richtungen entlang der Längsachse des rohrförmigen Deflektorgrundkörpers aus dem Inneren der Gasabströmvorrichtung nach außen ausströmen kann.

Vor diesem Hintergrund ist es Aufgabe der Erfindung, einen Deflektor für einen Diffusor eines Gasgenerators anzugeben, der einfach herzustellen ist und eine verbesserte Gasführung bei einem Ausströmen eines Gases aus dem Gasgenerator ermöglicht, so dass eine mechanische und/oder thermische Belastung eines aufzublasenden Gassacks, der an den Gasgenerator bzw. Diffusor und/oder Deflektor angeschlossen ist, reduziert werden kann. Ferner ist es Aufgabe der Erfindung, eine Diffusor-Deflektor Baugruppe und einen Gasgenerator mit einer solchen Diffusor-Deflektor Baugruppe anzugeben. Die Erfindung macht es sich außerdem zur Aufgabe, ein Gassackmodul sowie ein Fahrzeugsicherheitssystem mit einem Gasgenerator sowie ein Verfahren zum Herstellen eines Deflektors für einen Diffusor eines Gasgenerators und ein Montageverfahren für einen Deflektor auf einem Diffusor für einen Gasgenerator anzugeben.

Erfindungsgemäß wird diese Aufgabe im Hinblick auf den Deflektor durch den Gegenstand des Patentanspruchs 1, im Hinblick auf die Diffusor-Deflektor Baugruppe durch den Gegenstand des Patentanspruchs 4, im Hinblick auf den Gasgenerator durch den Gegenstand des Patentanspruchs 7, im Hinblick auf das Gassackmodul durch den Gegenstand des Patentanspruchs 9, im Hinblick auf das Fahrzeugsicherheitssystem durch den Gegenstand des Patentanspruchs 10 und im Hinblick auf das Herstellungsverfahren durch den Gegenstand des Patentanspruchs 11 und im Hinblick auf das Montageverfahren durch den Gegenstand des Patentanspruchs 13 gelöst.

Der erfindungsgemäße Deflektor ist dadurch gekennzeichnet, dass der Deflektorgrundkörper mit der Gasabströmvorrichtung einstückig verbunden ist und die Ausströmbereiche in zwei Deflektorlaschen der Gasabströmvorrichtung angeordnet sind, die zu einer senkrecht zur Längsachse stehenden Achse so positionierbar sind, dass jeweils ein Abströmwinkel einstellbar ist. Insbesondere zeigt die Gasabströmvorrichtung, in ihrer Draufsicht gesehen, entlang ihrer Längserstreckung eine im Wesentlichen rechteckige Form. Weiters insbesondere kann die äußere Kontur bzw. die äußere Einhüllende Form der Gasabströmvorrichtung als kastenförmig oder quaderförmig betrachtet werden. Der erfindungsgemäße Deflektor kann einfach und kostengünstig durch Umformen aus einem Rohrstück hergestellt werden. Der Deflektor hat weiterhin den Vorteil, dass er auf bekannte Diffusoren von Gasgeneratoren aufgesetzt werden kann. Der Deflektor ermöglicht sowohl ein materialschonendes und gasströmungstechnisch vorteilhaftes Befüllen eines Gassacks mit Gas als auch ein Befüllen von zwei Gassäcken zur gleichen Zeit. Durch das Verwenden eines erfindungsgemäßen Deflektors kann somit insbesondere auf die Verwendung von aufwendigen und kostenintensiven Gassäcken, die zum Beispiel eine sogenannte zusätzliche Calzone aufweisen, d.h. eine Abschirmung aus Hitze- und Teilchen-beständigem Gewebe, die entweder an der Gasausströmöffnung des Gasgenerators oder als Innensack in dem Gassack angeordnet ist, verzichtet werden. Zudem kann durch die im Wesentlichen rechteckige Grundfläche der Gasabströmvorrichtung des erfindungsgemäßen Diffusors zum einen ein äußerst platzsparender Diffusor geschaffen werden und zum anderen kann durch diese Formgebung ein weiteres anschließendes Bauteil, wie beispielsweise ein Gassackmodul oder eine Halterung für weitere Bauteilgruppen, geometrisch einfach und äußerst pass- und formgenau angeschlossen werden.

Indem der Deflektorgrundkörper mit der Gasabströmvorrichtung einstückig verbunden ist, bedeutet dies eine leichte Handhabung bei einer Montage und/oder Herstellung. Der Abströmwinkel kann vorzugsweise zwischen 0° und 35° einstellbar sein. Die Diffuserlaschen können insbesondere jeweils in Form einer um vorgenannte Achse verkippbaren Zunge ausgestaltet sein. Bei einem eingestellten Abströmwinkel von 0° steht die Diffusorlasche senkrecht zu der Längsachse des rohrförmigen Deflektorgrundkörpers. Der Abströmwinkel kann für eine erste und einen gegenüberliegende zweite Diffusorlasche unterschiedlich eingestellt sein. So lassen sich Feineinstellungen bezüglich eines Aufblasverhaltens eines aufzublasenden Gassacks vornehmen.

Bei einer weiteren bevorzugten Ausführungsform ist senkrecht zu jeder der Deflektorlaschen auf beiden Seiten eine Leitlasche angeordnet. Zweckmäßigerweise sind die Leitlaschen durch sich gegenüberliegende Seitenwände der Gasabströmvorrichtung gebildet. Dadurch lässt sich ein aus dem Innenbereich des Deflektors nach außen durch die Ausströmbereiche ausströmendes Gas noch besser steuern bzw. bezüglich seines weiteren Strömungsverlaufs beeinflussen bzw. leiten, wobei vorteilhaft durch die Leitlaschen das ausströmende Gas über eine gewisse Distanz kanalförmig, quasi nach dem Prinzip von "Scheuklappen", weitergeleitet werden kann.

In einer weiteren Ausführungsform weist die Deflektorlasche jeweils an einer dem rohrförmigen Deflektorgrundkörper zugewandten Seite einen bogenförmigen Ausschnitt mit einem Radius auf, der insbesondere dem Radius des rohrförmigen Deflektorgrundkörpers entspricht. Hierdurch lässt sich im montierten Zustand des Deflektors an einen Gasgenerator, insbesondere Diffusor eines Gasgenerators, ein äußerst dichter Anschluss gewährleisten, sodass ausströmendes Gas im Wesentlichen nur durch die Ausströmbereiche der Gasabströmvorrichtung geleitet wird und ein ungewünschter anderweitiger Gas-Bypass vermieden werden kann.

Ein nebengeordneter Aspekt der Erfindung betrifft eine Diffusor-Deflektor Baugruppe für einen Gasgenerator, insbesondere für einen Rohrgasgenerator eines Gassackmoduls, umfassend einen Diffusor mit einem im Wesentlichen rohrförmigen Grundkörper mit einer Längsachse, einer mit dem Grundkörper verbundenen Prallkappe an einem ersten Ende des Grundkörpers und einer an einem dem ersten Ende des Grundkörpers gegenüberliegenden zweiten Ende ausgebildeten Anschlussvorrichtung, vorzugsweise in Form einer Verjüngung, wobei zumindest eine Öffnung in der Wandung des rohrförmigen Grundkörpers ausgebildet ist. Weiters umfasst die Diffusor-Deflektor Baugruppe einen erfindungsgemäßen Deflektor, wobei ein Außendurchmesser des Grundkörpers des Diffusors geringfügig kleiner ist als ein Innendurchmesser des Deflektors, wobei vorzugsweise der Außendurchmesser des Grundkörpers des Diffusors und der Innendurchmesser des Deflektors formschlüssig aufeinander abgestimmt sind.

Bei einer bevorzugten Ausführungsform ist die zumindest eine Öffnung eine im Wesentlichen rechteckige Öffnung. Unter im Wesentlichen rechteckig soll verstanden werden, dass die Seitenkanten parallel oder nahezu parallel verlaufen. Die Ecken der rechteckigen Öffnung können abgerundet sein.

Vorzugsweise weist die im Wesentlichen rechteckige Öffnung in der Wandung des Grundkörpers des Diffusors eine dem Abstand zwischen den Deflektorlaschenachsen entsprechende Länge und der Deflektorlaschenbreite entsprechende Breite auf. Somit lässt sich die Abström- bzw. Ausströmfläche der rechteckigen Öffnung geometrisch auf den ihr angeschlossenen Deflektor bzw. auf den entsprechend wirksamen angeströmten Bereich des Deflektors genau anpassen.

In einer Ausführungsform ist die zumindest eine Öffnung durch eine Vielzahl von Durchlöchern in einem Ausströmbereich des Grundkörpers des Diffusors gebildet, der insbesondere eine dem Abstand zwischen den Deflektorlaschenachsen entsprechende Länge und der Deflektorlaschenbreite entsprechende Breite aufweist. Die Vielzahl von Durchlöchern kann in Reihen angeordnet sein.

Ein weiterer nebengeordneter Aspekt der Erfindung betrifft einen Gasgenerator, insbesondere Rohrgasgenerator, für ein Gassackmodul mit einem rohrförmigen Gehäuse und mit einer erfindungsgemäßen Diffusor-Deflektor Baugruppe, die an einem ersten Ende des Gasgenerators angeordnet ist, wobei der Gasgenerator ein pyrotechnischer Gasgenerator oder ein Hybridgasgenerator ist.

In einer zweckmäßigen Ausführungsform sind ein Durchmesser des Gasgenerators und des Diffusors im Wesentlichen gleich groß.

In einer Ausführungsform weist das Gehäuse des Gasgenerators am ersten Ende eine Verjüngung auf, in die eine/die Verjüngung des Diffusors eingreift. Der Diffusor ist mit einer entsprechenden Verkrimpung oder Rollierung am Gehäuse des Gasgenerators fixiert.

Ein weiterer nebengeordneter Aspekt der Erfindung betrifft ein Gassackmodul mit einem Gasgenerator, einem von dem Gasgenerator aufblasbaren Gassack und einer Befestigungsvorrichtung zur Anbringung des Gassackmoduls an einem Fahrzeug, wobei der Gasgenerator wie oben beschrieben als der erfindungsgemäße Gasgenerator ausgebildet ist.

Ferner wird im Rahmen der vorliegenden Anmeldung ein Fahrzeugsicherheitssystem, insbesondere zum Schutz einer Person, beispielsweise eines Fahrzeuginsassen oder Passanten, mit einem Gasgenerator, einem von diesem aufblasbaren Gassack, als Teil eines Gassackmoduls, und einer elektronischen Steuereinheit, mittels der der Gasgenerator bei Vorliegen einer Auslösesituation aktivierbar ist, vorgeschlagen, wobei der Gasgenerator wie oben beschrieben als der erfindungsgemäße Gasgenerator ausgebildet ist.

Ein weiterer nebengeordneter Aspekt der Erfindung betrifft ein Verfahren zum Herstellen eines Deflektors für einen Diffusor eines Gasgenerators, insbesondere für einen Rohrgasgenerator eines Gassackmoduls umfassend die folgenden Schritte:
a) Bereitstellen eines rohrförmigen Deflektorgrundkörpers mit einem vorgegebenen Innendurchmesser und einem ersten Ende und einem zweiten Ende,
b) Formen eines Profils in einem Rohrumfangsabschnitt des Deflektorgrundkörpers mittels eines Profilwerkzeugs, in dem von einer Innenseite des Deflektorggrundkörpers das Profilwerkzeug gegen die Wandung des Deflektorgrundkörpers in radialer Richtung gedrückt oder gezogen wird,
c) Herstellen von Durchströmöffnungen in einem Bereich des Profils sowie Herstellen von jeweils einem bogenförmigen Ausschnitt an gegenüberliegenden Enden des Profils,
d) Einschneiden des Profils in Axialrichtung von einem ersten und einem zweiten Ende des Profils bis zu einer vorgegebenen Länge mit je zwei voneinander beabstandeten Schnitten, so dass an den beiden Enden des Profils jeweils eine Deflektorlasche erzeugt wird, und
e) Biegen beider Deflektorlaschen radial nach innen.

Das erfindungsgemäße Verfahren ist einfach und kostengünstig. In Schritt c) kann das Herstellen von Durchströmöffnungen und das Herstellen der bogenförmigen Ausschnitte insbesondere durch Stanzen, Bohren oder Schneiden, insbesondere Laserschneiden, durchgeführt werden. Im Schritt d) ist unter dem Begriff "Einschneiden" auch zu verstehen, dass dies mittels eines rein mechanischen Schneidewerkzeugs, aber auch z.B. mittels Laserschneiden oder auch durch Stanzen vorgenommen werden kann.

In einer Ausgestaltung ist das Profilwerkzeug ein Vierkantprofilwerkzeug.

In einer weiteren Ausgestaltung sind die Schnitte an den Kanten des Profils angeordnet.

Zweckmäßigerweise werden die Deflektorlaschen auf einen Winkel von 0° bis 35° bezüglich einer Radialrichtung eingestellt. Dies bedeutet, dass die Deflektorlaschen entsprechend dem Winkel nach innen gebogen werden können.

Ein weiterer nebengeordneter Aspekt der Erfindung betrifft ein Montageverfahren für einen Deflektor auf einem Diffusor für einen Gasgenerator umfassend die folgenden Schritte:
a) Bereitstellen eines Deflektors nach einem der Ansprüche 1 bis 3,
b) Bereitstellen eines Diffusors mit einem im Wesentlichen rohrförmigen Grundkörper mit einer Längsachse, einer mit dem Grundkörper verbundenen Prallkappe an einem ersten Ende des Grundkörpers und einer an einem dem ersten Ende des Grundkörpers gegenüberliegenden zweiten Ende ausgebildeten Anschlussvorrichtung, vorzugsweise in Form einer Verjüngung, wobei zumindest eine Öffnung in der Wandung des rohrförmigen Grundkörpers ausgebildet ist,
c) Aufschieben des Deflektors auf den Diffusor, und
d) Ausrichten des Deflektors gegenüber dem Diffusor, so dass die Gasabströmvorrichtung des Deflektors über der zumindest einen Öffnung des Diffusors fluchtend ausgerichtet ist.

Das erfindungsgemäße Montageverfahren ermöglicht einfach und kostengünstig einen Deflektor auf einem Diffusor zu montieren.

Die Erfindung wird im Folgenden anhand von Ausführungsbeispielen unter Bezugnahme auf die beigefügten Figuren näher erläutert.

Darin zeigen:
- Fig. 1: einen Gasgenerator mit einem erfindungsgemäßen Diffusor und Deflektor;
- Fig. 2: eine Ausschnittsvergrößerung aus Fig. 1
- Fig. 3 a - c: Ansichten eines erfindungsgemäßen Deflektors,
- Fig. 4: einen Schnitt durch den Deflektor nach Fig. 3c,
- Fig. 5: einen Gasgenerator mit Diffusor ohne Deflektor.

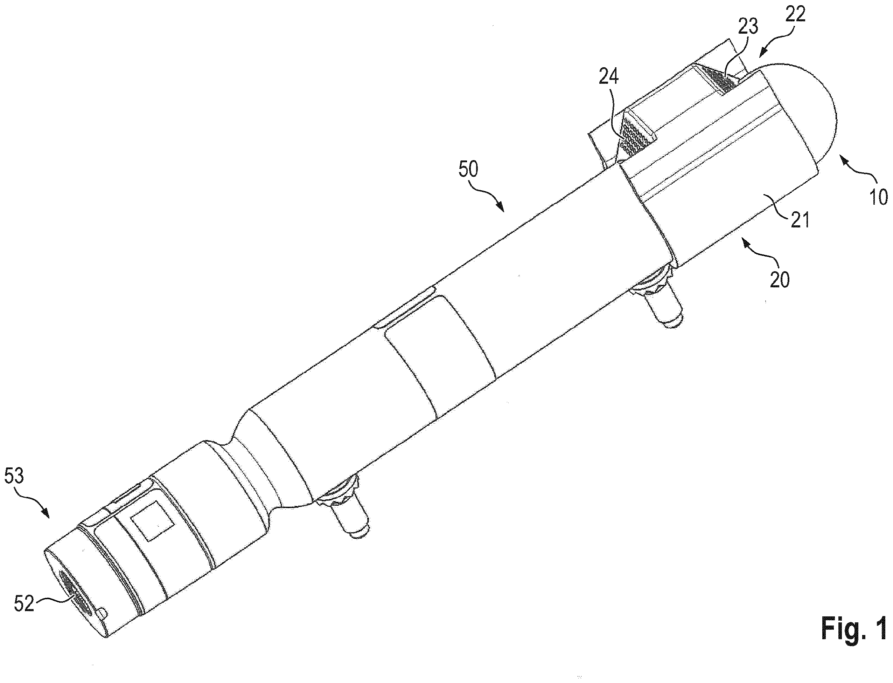

Fig. 1 zeigt einen Gasgenerator 50, insbesondere einen langgestreckten Gasgenerator in Form eines Rohrgasgenerators, mit einem erfindungsgemäßen Deflektor 20 und einer den Deflektor 20 umfassenden erfindungsgemäßen Diffusor-Deflektor Baugruppe. Der Gasgenerator 50 weist an einer seiner Enden einen Diffusor 10 auf und and dem dem Diffusor 10 gegenüberliegenden Ende bzw. der vom Diffusor 10 abgewandten Seite des Gasgenerators 50 ein Anzündergehäuse 53, welches einen pyrotechnisch-elektrischen Anzünder 52 umschließt, auf. Bei dem Generator 50 kann es sich um einen rein pyrotechnischen Gasgenerator oder um einen Hybridgasgenerator, welcher im nicht aktivierten Zustand eine mit Druckgas gefüllte Druckgaskammer aufweist, handeln. Der Deflektor 20 weist einen Deflektorgrundkörper 21 mit einer Längsachse 16 und eine Gasabströmvorrichtung 22 auf. Dabei sind in der Gasabströmvorrichtung 22 auf zwei sich gegenüberliegenden Seiten ein erster Abströmbereich 23 und ein zweiter Abströmbereich 24 angeordnet. Insbesondere zeigt die Gasabströmvorrichtung 22 eine äußere Kontur bzw. eine äußere Einhüllende Form, die als kastenförmig oder quaderförmig bezeichnet werden kann. Dies hat einen entscheidenden Vorteil für an die Gasabströmvorrichtung 22 bzw. an den Deflektor 20 angrenzende oder angeschlossene (nicht dargestellte) weitere Bauteile, wie beispielsweise ein Modulgehäuse oder eine Gaseinfüllvorrichtung eines mit Gas zu befüllenden Luftsacks. Konkret kann dabei die vorgenannte geometrische Form der Gasabströmvorrichtung 22 bzw. ihrer rechteckigen Grundfläche eine einfache kostengünstige Anschlussmöglichkeit darstellen. Insbesondere kann die Gasabströmvorrichtung 22 mit ihrer kastenförmigen bzw. quaderförmigen Form eine äußerst günstige niedrige Bauhöhe aufweisen. Anders ausgedrückt steht dabei die Gasabströmvorrichtung 22 nur in geringer Höhe bzw. geringem radialen Abstand von dem Außengehäuse des Gasgenerators 50 ab.

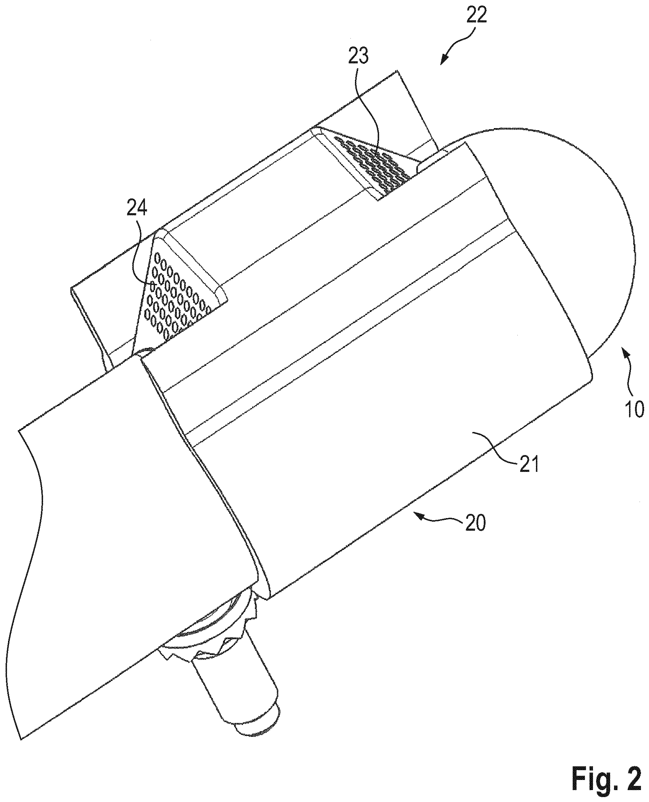

Fig. 2 zeigt eine Ausschittsvergrößerung aus Fig. 1, bei der der endseitige Bereich des Gasgenerators 50, an den der Diffusor 10 angeschlossen ist und den Deflektor 20, welcher wiederum an den Diffusor 10 angeschlossen ist. Hierbei ist insbesondere zu erkennen, dass der Deflektor 20 als ein einstückiges Bauteil ausgebildet ist, welches von außen her auf den Diffusor 10 aufgeschoben ist und damit diesen über einen großen Bereich entlang der axialen Erstreckung des Diffusors 10 eng umschließt und somit fest an den Diffusor 10 angebunden ist. Hierbei ist es auch möglich, dass der Deflektor 20 auch einen Teilbereich des Gasgenerators 50 selbst, quasi überlappend mit dem Diffusor 10, umschließt. Ebenso ist ein stirnseitiges Ende des Diffusors 10, welches in Form einer kalottenförmig ausgebildeten Prallkappe 12 ausgebildet ist, wobei die Prallkappe 12 einstückig mit dem Diffusor 10 ausgebildet oder als separates Zusatzbauteil an diesen angeschlossen sein kann.

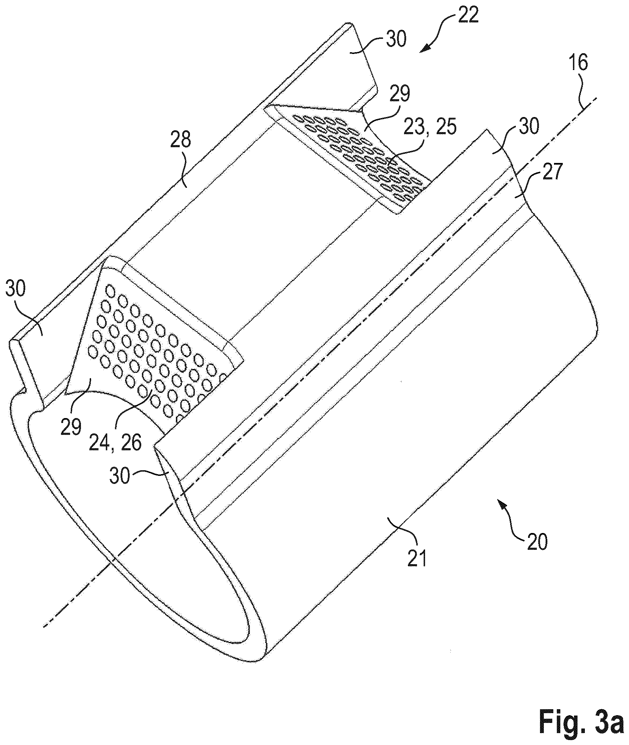

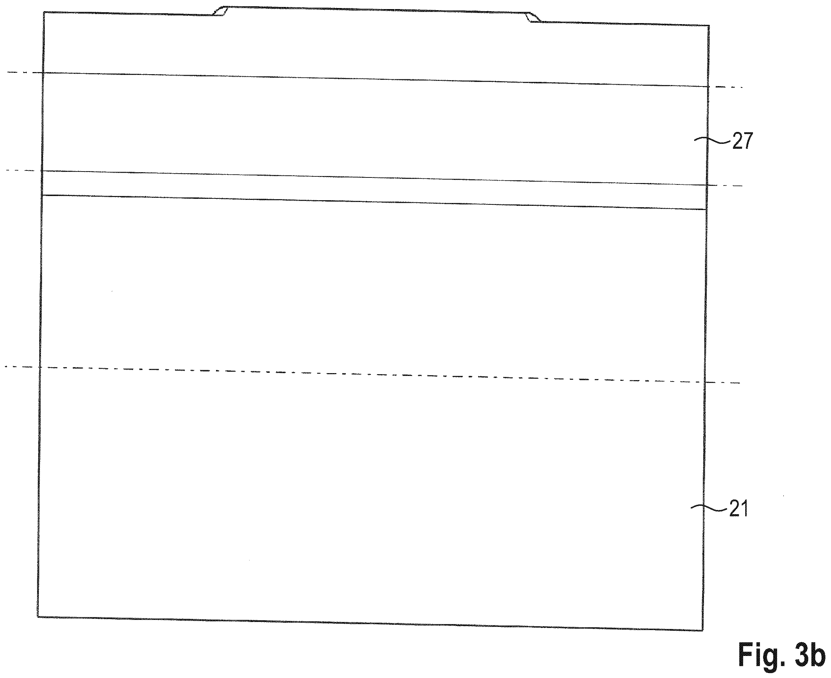

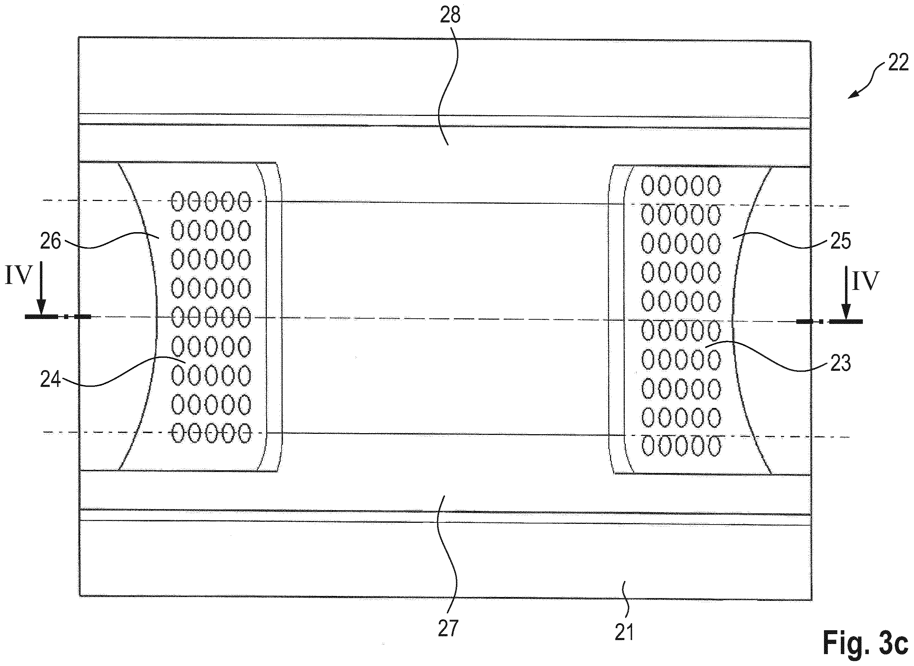

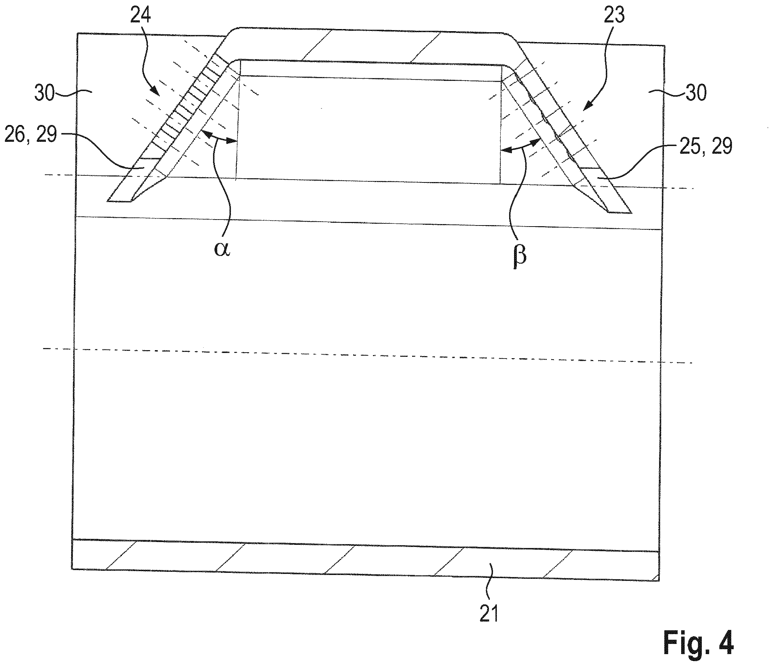

Fig. 3a, 3b und 3c zeigen verschiedene Ansichten des erfindungsgemäßen Deflektors 20, wobei Fig. 3a eine dreidimensionale Ansicht, Fig. 3b eine Seitenansicht und Fig. 3b eine Draufsicht des erfindungsgemäßen Deflektors 20 darstellen. Auch hier ist gut zu erkennen, dass der Deflektor 20 den rohrförmigen Deflektorgrundkörper 21 aufweist, der einstückig mit der Gasabströmvorrichtung 22 verbunden ist. Beide Elemente, der Deflektorgrundkörper 21 und die Gasabströmvorrichtung 22 können somit als unterschiedliche Abschnitte des Deflektors 20 aufgefasst werden, wobei die Gasabströmvorrichtung 22 auch als ein nach radial außen hin, ausgebildeter Fortsatz, der sich an den Deflektorgrundkörper 21 anschließt, verstanden werden kann. Die Gasabströmvorrichtung 22 weist eine erste Seitenwand 25 und eine dazu gegenüberliegende zweite Seitenwand 26, sowie eine dritte Seitenwand 27 und eine dazu gegenüberliegende vierte Seitenwand 27 auf. Die dritte Seitenwand 27 und die vierte Seitenwand 28 sind in der gezeigten Ausführungsform im Wesentlichen parallel zueinander. Äußere Bereiche der dritten Seitenwand 27 und der vierten Seitenwand 28 bilden jeweils Leitlaschen 30 aus. Die erste Seitenwand 25 und die zweite Seitenwand 26 sind aus zwei Deflektorlaschen 29 gebildet und weisen den ersten Ausströmbereich 23 und den zweiten Ausströmbereich 24 der Gasabströmvorrichtung 22 auf. In Fig. 3a sind auch gut die beiden nach radial innen verkippten bzw. gebogenen beiden Deflektorlaschen 29 zu erkennen. In anderen Worten ausgedrückt, sind die beiden Deflektorlaschen 29 der Gasabströmvorrichtung 22 auch als Flächenelemente zu verstehen, welche sich jeweils um eine senkrecht zur Längsachse 16 des Deflektorgrundkörpers 21 stehenden bzw. gedachten Achse so nach innen verkippen bzw. verbiegen lassen, dass ein Abströmwinkel α, β einstellbar ist - siehe hierzu auch Fig. 4. Anders ausgedrückt, handelt es sich bei den beiden Deflektorlaschen 29 mit ihren Ausströmbereichen 23, 24 um eine Art gasdurchlässige Klappen, welche in verschiedenen Winkeleinstellungen zu dem Deflektorgrundkörper 21 hin ausgerichtet "geklappt" werden können, um für ein aus dem Innenbereich der Gasabströmvorrichtung 22 durch die gasdurchlässigen Klappen hindurchströmendes Gas einen entsprechenden Abströmwinkel (o, β) einzustellen bzw. einen entsprechende ausströmende Gasströmung justieren zu können. Weiterhin weisen die beiden Deflektorlaschen 29 an ihren freien Enden, also an den jeweils nach innen gebogenen Enden, jeweils einen bogenförmigen Ausschnitt bzw. Aussparung auf. Der Radius des Ausschnitts entspricht dabei im Wesentlichen dem Radius des rohrförmigen Deflektorgrundkörpers 21. Anders ausgedrückt, ist der bogenförmige Ausschnitt derart ausgestaltet, dass er bei der Montage des Deflektors 20 auf den Diffusor 10 bezüglich der Außenkontur des Diffusors 10 angepasst bzw. darauf abgestimmt ist, insbesondere derart, dass kaum oder nur minimal wenig Gas zwischen der Deflektorlasche 29 bzw. dessen bogenförmigen Ausschnitts und dem Diffusor 10 durchströmen bzw. entweichen kann.

In der Draufsicht des Deflektors, welche die Fig. 3c zeigt, ist die im Wesentlichen rechteckige Grundfläche der Gasabströmvorrichtung 22 zu erkennen. Dabei kann die rechteckige Grundfläche als eine Fläche aufgefasst werden, die zwischen der dritten und vierten Seitenwand (27, 28) aufgespannt ist. Im engeren Sinne kann die rechteckige Grundfläche als diejenige Fläche betrachtet werden, welche zum einen von der dritten und vierten Seitenwand (27, 28) und zum anderen von den beiden jeweils senkrecht zur Längsachse 16 stehenden Achsen, um welche jeweils die Deflektorlaschen 29 verkippt bzw. nach innen gebogen sind. Die rechteckige Grundfläche der Gasabströmvorrichtung 22 bietet durch ihre entsprechende geometrisch einfache und höchst kompatible Gestaltung eine vorteilhafte Anschlussmöglichkeit für weitere nicht dargestellte Bauteile, wie beispielsweise ein Gassackmodulgehäuse oder eine Einlassvorrichtung bzw. Einlassöffnung für einen aufzublasenden Gassack.

Fig. 4 zeigt einen Schnitt entlang IV-IV in Fig. 3c. Die Deflektorlaschen 29 stehen somit in einem Winkel bzw. Abströmwinkel α bzw. β von 35°. Ein Teilbereich der Deflektorlaschen 29 ist als erster Ausströmbereich 23 bzw. als zweiter Ausströmbereich 24 ausgestaltet. Die Leitlaschen 30 sind senkrecht zu den Deflektorlaschen 29 angeordnet. Die Deflektorlaschen 29 sind also zwischen den beiden Leitlaschen 30 positioniert und bilden mit diesen zusammen quasi einen nahezu kastenförmigen teilweise offenen Kanal, in dem ein aus dem Deflektor 20 ausströmendes Gas in gewisser Weise geleitet, geführt bzw. gerichtet ausströmen kann.

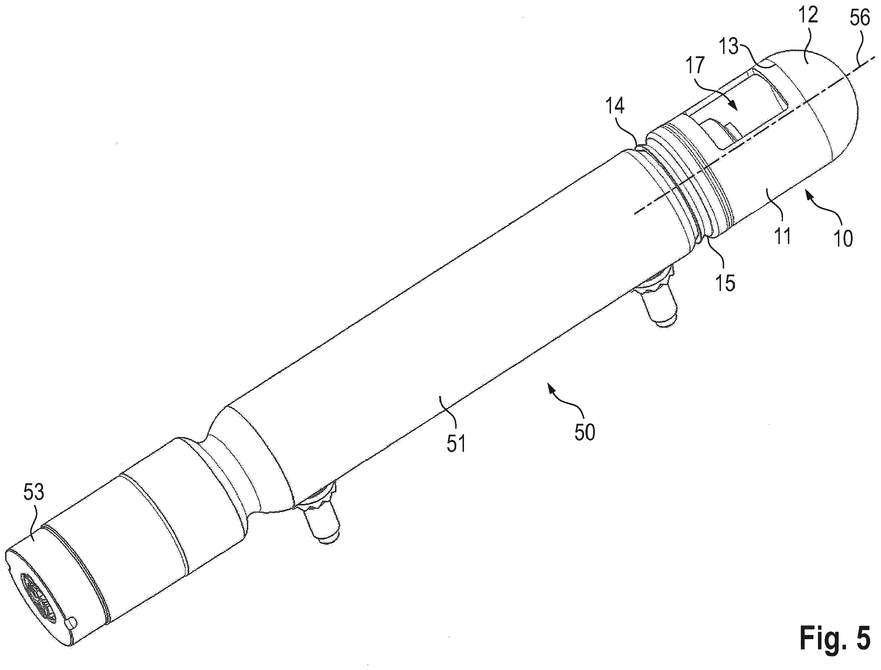

Fig. 5 zeigt einen Gasgenerator 50 mit einem Diffusor 10. Der Gasgenerator 50 weist ein Anzündergehäuse 53 und rohrförmiges Gehäuse 51 auf. Der Diffusor 10 hat einen rohrförmigen Grundkörper 11 mit einer Längsachse 56, ein erstes Ende 13 und ein dem Anzündergehäuse 53 zugewandtes zweites Ende 14. An das erste Ende 13 des Grundkörpers 11 schließt sich eine Prallkappe 12 an, die mit dem Grundkörper 11 einstückig ausgebildet ist. Die Prallkappe 12 kann alternativ auch als separates Bauteil mit dem Grundkörper 11 verbunden bzw. an diesem befestigt sein. Die Prallkappe 12 kann im Innenbereich des Diffusors 10 strömendes Gas umlenken. Der Diffusor weist weiterhin eine Öffnung 17 auf, welche im Wesentlichen rechteckig ausgestaltet ist. Der/Ein Deflektor, welcher an den Gasgenerator 50, insbesondere an den Diffusor 10 des Gasgenerators 50, montiert werden soll, kann vorteilhaft derart positioniert an bzw. über der Öffnung 17 positioniert werden, dass ein gesamtes ausströmendes Gas aus dem Gasgenerator 50 bzw. Diffusor 10 durch die Öffnung 17 direkt und ohne Gasverluste in einen Innenraum des Deflektors einströmen kann. Anders ausgedrückt, ist die Öffnung 17 derart geometrisch vorteilhaft ausgeführt, dass kein bzw. kaum Gasverlust bei einem Einströmen bzw. Überströmen in einen auf den Diffusor 10 aufgesetzten Deflektor, insbesondere kasten- bzw. quaderförmigen Deflektor, auftreten kann. Der Diffusor 10 und rohrförmiges Gehäuse 51 des Gasgenerators 50 weisen jeweils eine komplementär zueinander ausgebildete Verjüngung 15 auf und sind an der Position der Verjüngung 15 mittels einer Krimpverbindung oder Rollierverbindung miteinander verbunden. Hierbei kann wahlweise der Diffusor 10 vor seiner Montage auf den Gasgenerator 50 noch ohne eine solche Verjüngung ausgeführt sein und mit seinem entsprechenden Ende über eine Verjüngung in dem Gehäuse 51 des Gasgenerators 50 positioniert werden und dann erst durch einen Rollier- oder Krimpmontageprozess an das Gehäuse 51 angebunden bzw. befestigt werden, sodass dadurch eine entsprechende Verjüngung an dem Diffusor 10 ausgebildet wird.

### Bezugszeichenliste

- 10: Diffusor
- 11: Grundkörper
- 12: Prallkappe
- 13: erstes Ende
- 14: zweites Ende
- 15: Verjüngung
- 16: Längsachse
- 17: Öffnung
- 20: Deflektor
- 21: Deflektorgrundkörper
- 22: Gasabströmvorrichtung
- 23: Ausströmbereich
- 24: Ausströmbereich
- 25: erste Seitenwand
- 26: zweite Seitenwand
- 27: dritte Seitenwand
- 28: vierte Seitenwand
- 29: Deflektorlasche
- 30: Leitlasche
- 50: Gasgenerator
- 51: Gehäuse
- 52: Anzünder
- 53: Anzündergehäuse
- 56: Längsachse
- α, β: Abströmwinkel

## Patentansprüche

1. Deflektor (20) für einen Diffusor (10) eines Gasgenerators (50), insbesondere für einen Rohrgasgenerator (50) eines Gassackmoduls, mit einem im Wesentlichen rohrförmigen Deflektorgrundkörper (21) und einer damit verbundenen Gasabströmvorrichtung (22), wobei die Gasabströmvorrichtung (22) eine im Wesentlichen rechteckige Grundfläche und zwei Ausströmbereiche (23, 24) an sich gegenüberliegenden Seitenwänden (25, 26) aufweist, so dass ein Gas im Wesentlichen in entgegengesetzte Richtungen entlang der Längsachse (16) des rohrförmigen Deflektorgrundkörpers (21) aus dem Inneren der Gasabströmvorrichtung (22) nach außen ausströmen kann,
**dadurch gekennzeichnet, dass**
der Deflektorgrundkörper (21) mit der Gasabströmvorrichtung (22) einstückig verbunden ist und die Ausströmbereiche (23, 24) in zwei Deflektorlaschen (29) der Gasabströmvorrichtung (22) angeordnet sind, die zu einer senkrecht zur Längsachse (16) stehenden Achse so positionierbar sind, dass jeweils ein Abströmwinkel (α, β) einstellbar ist.

2. Deflektor (20) nach Anspruch 1,
**dadurch gekennzeichnet, dass**
senkrecht zu jeder der Deflektorlaschen (29) auf beiden Seiten eine Leitlasche (30) angeordnet ist, wobei vorzugsweise die Leitlaschen (30) durch sich gegenüberliegende Seitenwände (27, 28) der Gasabströmvorrichtung (22) gebildet sind und/oder der Abströmwinkel (α, β) zwischen 0° und 35° einstellbar ist.

3. Deflektor (20) nach einem der vorhergehenden Ansprüche,
**dadurch gekennzeichnet, dass**
die Deflektorlaschen (29) jeweils an einer dem rohrförmigen Deflektorgrundkörper (21) zugewandten Seite einen bogenförmigen Ausschnitt mit einem Radius aufweisen, der insbesondere dem Radius des rohrförmigen Deflektorgrundkörpers (21) entspricht.

4. Diffusor-Deflektor Baugruppe, für einen Gasgenerator (50), insbesondere für einen Rohrgasgenerator eines Gassackmoduls, umfassend einen Diffusor (10) mit einem im Wesentlichen rohrförmigen Grundkörper (11) mit einer Längsachse (56), einer mit dem Grundkörper (11) verbundenen Prallkappe (12) an einem ersten Ende (13) des Grundkörpers (11) und einer an einem dem ersten Ende (13) des Grundkörpers (11) gegenüberliegenden zweiten Ende (14) ausgebildeten Anschlussvorrichtung, vorzugsweise in Form einer Verjüngung (15), wobei zumindest eine Öffnung (17) in der Wandung des rohrförmigen Grundkörpers (11) ausgebildet ist, und umfassend einen Deflektor (20) nach einem der Ansprüche 1 bis 3,
wobei ein Außendurchmesser des Grundkörpers (11) des Diffusors (12) geringfügig kleiner ist als ein Innendurchmesser des Deflektors (20), wobei vorzugsweise der Außendurchmesser des Grundkörpers (11) des Diffusors (12) und der Innendurchmesser des Deflektors (20) formschlüssig aufeinander abgestimmt sind.

5. Diffusor-Deflektor Baugruppe nach Anspruch 4,
**dadurch gekennzeichnet, dass**
die zumindest eine Öffnung (17) eine im Wesentlichen rechteckige Öffnung ist, die vorzugsweise eine dem Abstand zwischen den Deflektorlaschenachsen entsprechende Länge und der Deflektorlaschenbreite entsprechende Breite aufweist.

6. Diffusor-Deflektor Baugruppe nach Anspruch 4,
**dadurch gekennzeichnet, dass**
die zumindest eine Öffnung (17) durch eine Vielzahl von Durchlöchern in einem Ausströmbereich des Grundkörpers (11) des Diffusors (10) gebildet ist, der insbesondere eine dem Abstand zwischen den Deflektorlaschenachsen entsprechende Länge und der Deflektorlaschenbreite entsprechende Breite aufweist.

7. Gasgenerator (50), insbesondere Rohrgasgenerator, für ein Gassackmodul mit einem rohrförmigen Gehäuse (51) und mit einer Diffusor-Deflektor Baugruppe (10) nach einem der Ansprüche 4 bis 6, die an einem ersten Ende des Gasgenerators (50) angeordnet ist, wobei der Gasgenerator (50) ein pyrotechnischer Gasgenerator oder ein Hybridgasgenerator ist.

8. Gasgenerator (50) nach Anspruch 7,
**dadurch gekennzeichnet, dass**
ein Durchmesser des Gasgenerators (50) und des Diffusors (10) im Wesentlichen gleich groß sind, wobei insbesondere das Gehäuse (51) des Gasgenerators (50) am ersten Ende eine Verjüngung aufweist, in die eine/die Verjüngung (15) des Diffusors (10) eingreift.

9. Gassackmodul mit einem Gasgenerator (50), einem von dem Gasgenerator (50) aufblasbaren Gassack und einer Befestigungsvorrichtung zur Anbringung des Gassackmoduls an einem Fahrzeug,
**dadurch gekennzeichnet, dass**
der Gasgenerator (50) nach einem der Ansprüche 7 bis 8 ausgebildet ist.

10. Fahrzeugsicherheitssystem, insbesondere zum Schutz einer Person, beispielsweise eines Fahrzeuginsassen oder Passanten, mit einem Gasgenerator (50), einem von diesem aufblasbaren Gassack, als Teil eines Gassackmoduls, und einer elektronischen Steuereinheit, mittels der der Gasgenerator (50) bei Vorliegen einer Auslösesituation aktivierbar ist, **dadurch gekennzeichnet, dass**
der Gasgenerator (50) nach einem der Ansprüche 7 bis 8 ausgebildet ist.

11. Verfahren zum Herstellen eines Deflektors (20) für einen Diffusor eines Gasgenerators (50), insbesondere für einen Rohrgasgenerator eines Gassackmoduls umfassend die folgenden Schritte:
a. Bereitstellen eines rohrförmigen Deflektorgrundkörpers (21) mit einem vorgegebenen Innendurchmesser und einem ersten Ende und einem zweiten Ende,
b. Formen eines Profils in einem Rohrumfangsabschnitt des Deflektorgrundkörpers (21) mittels eines Profilwerkzeugs, in dem von einer Innenseite des Deflektorgrundkörpers (21) das Profilwerkzeug gegen die Wandung des Deflektorgrundkörpers (21) in radialer Richtung gedrückt oder gezogen wird,
c. Herstellen von Durchströmöffnungen in einem Bereich des Profils sowie Herstellen von jeweils einem bogenförmigen Ausschnitt an gegenüberliegenden Enden des Profils,
d. Einschneiden des Profils in Axialrichtung von einem ersten und einem zweiten Ende des Profils bis zu einer vorgegebenen Länge mit je zwei voneinander beabstandeten Schnitten, so dass an den beiden Enden des Profils jeweils eine Deflektorlasche (29) erzeugt wird, und
e. Biegen beider Deflektorlaschen (29) radial nach innen.

12. Verfahren nach Anspruch 11,
**dadurch gekennzeichnet, dass**
das Profilwerkzeug ein Vierkantprofilwerkzeug ist, und/oder die Schnitte an den Kanten des Profils angeordnet sind, und/oder die Deflektorlaschen (29) auf einen Winkel von 0° bis 35° bezüglich einer Radialrichtung eingestellt werden.

13. Montageverfahren für einen Deflektor (20) auf einem Diffusor (10) für einen Gasgenerator (50) umfassend die folgenden Schritte:
a. Bereitstellen eines Deflektors (20) nach einem der Ansprüche 1 bis 3,
b. Bereitstellen eines Diffusors (10) mit einem im Wesentlichen rohrförmigen Grundkörper (11) mit einer Längsachse (56), einer mit dem Grundkörper (11) verbundenen Prallkappe (12) an einem ersten Ende (13) des Grundkörpers (11) und einer an einem dem ersten Ende (13) des Grundkörpers (11) gegenüberliegenden zweiten Ende (14) ausgebildeten Anschlussvorrichtung, vorzugsweise in Form einer Verjüngung (15), wobei zumindest eine Öffnung (17) in der Wandung des rohrförmigen Grundkörpers (11) ausgebildet ist,
c. Aufschieben des Deflektors (20) auf den Diffusor (10), und
d. Ausrichten des Deflektors (20) gegenüber dem Diffusor (10), so dass die Gasabströmvorrichtung (22) des Deflektors (20) über der zumindest einen Öffnung (17) des Diffusors (10) fluchtend ausgerichtet ist.

## Claims

1. A deflector (20) for a diffusor (10) of a gas generator (50), in particular for a tubular gas generator (50) of an airbag module,
comprising a substantially tubular deflector base body (21) and a gas discharge device (22) connected thereto,
wherein the gas discharge device (22) includes a substantially rectangular base and two outflow regions (23, 24) on opposite sidewalls (25, 26) so that gas can flow substantially in opposite directions along the longitudinal axis (16) of the tubular deflector base body (21) from the interior of the gas discharge device (22) to the outside.
**characterized in that**
the deflector base body (21) is integrally connected to the gas discharge device (22) and the outflow regions (22) are disposed in two deflector tabs (29) of the gas discharge device (22) which can be positioned relative to an axis being perpendicular to the longitudinal axis (16) so that a respective discharge angle (α, β) can be set.

2. The deflector (20) according to claim 1,
**characterized in that**
a guide tab (30) is arranged on both sides perpendicularly to each of the deflector tabs (29), wherein the guide tabs (30) are preferably formed by opposite sidewalls (27, 28) of the gas discharge device (22) and/ or **in that** the discharge angle (α, β)can be set between 0° and 35°.

3. The deflector (20) according to any one of the preceding claims, **characterized in that**
each of the deflector tabs (29) includes, on a side facing the tubular deflector base body (21), a curved cutout with a radius that corresponds especially to the radius of the tubular deflector base body (21).

4. A diffusor-deflector assembly group for a gas generator (50), in particular a tubular gas generator of an airbag module, comprising a diffusor (10) having a substantially tubular base body (11) with a longitudinal axis (56), a baffle cap (12) connected to the base body (11) at a first end (13) of the base body (11) and a connecting device configured at a second end (14) opposite to the first end (13) of the base body (11), preferably in the form of a taper (15), wherein at least one opening (17) is formed in the wall of the tubular base body (11), and comprising a deflector (20) according to any one of the claims 1 to 3, wherein an outer diameter of the base body (11) of the diffusor (10) is slightly smaller than an inner diameter of the deflector (20), the outer diameter of the base body (11) of the diffusor (10) and the inner diameter of the deflector (20) preferably being positively adapted to each other.

5. The diffusor-deflector assembly group according to claim 4,
**characterized in that**
the at least one opening (17) is a substantially rectangular opening which preferably has a length corresponding to the distance between the deflector tab axes and a width corresponding to the deflector tab width.

6. The diffusor-deflector assembly group according to claim 4,
**characterized in that**
the at least one opening (17) is formed by a plurality of through-holes in an outflow region of the base body (11) of the diffusor (10) which has in particular a length corresponding to the distance between the deflector tab axes and a width corresponding to the deflector tab width.

7. A gas generator (50), in particular a tubular gas generator, for an airbag module comprising a tubular housing (51) and comprising a diffusor-deflector assembly group (10) according to any one of the claims 4 to 6 that is arranged at a first end of the gas generator (50), the gas generator (50) being a pyrotechnic gas generator or a hybrid gas generator.

8. The gas generator (50) according to claim 7,
**characterized in that**
a diameter of the gas generator (50) and a diameter of the diffusor (10) are substantially equal, wherein particularly the housing (51) of the gas generator (50) at the first end includes a taper in which a/the taper (15) of the diffusor (10) engages.

9. An airbag module comprising a gas generator (50), an airbag inflatable by the gas generator (50) and a fastening device for attaching the airbag module to a vehicle,
**characterized in that**
the gas generator (50) is configured according to any one of the claims 7 to 8.

10. A vehicle safety system, in particular for protecting a person such as a vehicle occupant or a pedestrian, comprising a gas generator (50), an airbag inflatable by the latter as part of an airbag module, and an electronic control unit by means of which the gas generator (50) can be activated when a release situation is given,
**characterized in that**
the gas generator (50) is configured according to any one of the claims 7 to 8.

11. A method for manufacturing a deflector (20) for a diffusor of a gas generator (50), in particular for a tubular gas generator of an airbag module, comprising the following steps of:
a. providing a tubular deflector base body (21) having a predetermined inner diameter and a first end and a second end,
b. forming a profile in a circumferential tube section of the deflector base body (21) by means of a profile tool by pressing or pulling the profile tool from an inner face of the deflector base body (21) against the wall of the deflector base body (21) in the radial direction,
c. producing through-holes in an area of the profile and producing a curved cutout at each of opposite ends of the profile,
d. cutting the profile in the axial direction from first and second ends of the profile up to a predetermined length by two cuts spaced apart from each other so that a deflector tab (29) is produced at each of the two ends of the profile, and
e. bending both deflector tabs (29) radially inward.

12. The method according to claim 11,
**characterized in that**
the profile tool is a square profile tool, and/or the cuts are arranged at the edges of the profile, and/or the deflector tabs (29) are set to an angle of from 0° to 35° with respect to a radial direction.

13. A mounting method for a deflector (20) on a diffusor (10) for a gas generator (50), comprising the following steps of:
a. providing a deflector (20) according to any one of the claims 1 to 4,
b. providing a diffusor (10) comprising a substantially tubular base body (11) with a longitudinal axis (56), a baffle cap (12) connected to the base body (11) at a first end (13) of the base body (11), and a connecting device configured at a second end (14) opposite to the first end (13) of the base body (11), preferably in the form of a taper (15), wherein at least one opening (17) is formed in the wall of the tubular base body (11),
c. sliding the deflector (20) onto the diffusor (10), and
d. aligning the deflector (20) relative to the diffusor (10) so that the gas discharge device (22) of the deflector (20) is aligned above the at least one opening (17) of the diffusor (10).

## Revendications

1. Déflecteur (20) pour un diffuseur (10) d'un générateur de gaz (50), en particulier pour un générateur de gaz tubulaire (50) d'un module airbag, avec un corps de base de déflecteur (21) sensiblement tubulaire et un dispositif d'évacuation du gaz (22) relié à celui-ci, pour lequel le dispositif d'évacuation de gaz (22) possède une surface de base sensiblement rectangulaire et deux zones d'évacuation (23, 24) sur des parois latérales opposées (25, 26), de sorte qu'un gaz peut s'écouler vers l'extérieur depuis l'intérieur du dispositif d'évacuation de gaz (22) essentiellement dans des directions opposées le long de l'axe longitudinal (16) du corps de base tubulaire du déflecteur (21), **caractérisé en ce que**
le corps de base du déflecteur (21) est relié d'un seul tenant au dispositif d'évacuation du gaz (22) et les zones d'évacuation (23, 24) sont disposées dans deux pattes de déflecteur (29) du dispositif d'évacuation du gaz (22), lesquelles peuvent être positionnées par rapport à un axe perpendiculaire à l'axe longitudinal (16) de telle sorte qu'un angle d'évacuation (α, β) peut être respectivement réglé.

2. Déflecteur (20) selon la revendication 1,
**caractérisé en ce que**
perpendiculairement à chacune des pattes du déflecteur (29), une patte de guidage (30) est disposée de part et d'autre, pour lequel les pattes de guidage (30) sont de préférence formées par des parois latérales (27, 28) opposées du dispositif d'évacuation du gaz (22) et/ou l'angle d'évacuation (α, β) est réglable entre 0° et 35°.

3. Déflecteur (20) selon l'une des revendications précédentes,
**caractérisé en ce que**
les pattes du déflecteur (29) présentent chacune, sur un côté tourné vers le corps de base tubulaire du déflecteur (21), une découpe en forme d'arc avec un rayon, lequel correspond notamment au rayon du corps de base tubulaire du déflecteur (21).

4. Ensemble diffuseur-déflecteur, pour un générateur de gaz (50), en particulier pour un générateur de gaz tubulaire d'un module airbag, comprenant un diffuseur (10) avec un corps de base (11) sensiblement tubulaire avec un axe longitudinal (56), un déflecteur (12) relié au corps de base (11) à une première extrémité (13) du corps de base (11) et un dispositif de raccordement formé à une deuxième extrémité (14) opposée à la première extrémité (13) du corps de base (11), de préférence sous la forme d'un rétrécissement (15), pour lequel au moins une ouverture (17) est formée dans la paroi du corps de base tubulaire (11), et comprenant un déflecteur (20) selon l'une des revendications 1 à 3,
pour lequel un diamètre extérieur du corps de base (11) du diffuseur (12) est légèrement inférieur à un diamètre intérieur du déflecteur (20), pour lequel le diamètre extérieur du corps de base (11) du diffuseur (12) et le diamètre intérieur du déflecteur (20) sont de préférence adaptés l'un à l'autre par complémentarité de formes.

5. Ensemble diffuseur-déflecteur selon la revendication 4,
**caractérisé en ce que**
la au moins une ouverture (17) est une ouverture sensiblement rectangulaire, qui présente de préférence une longueur correspondant à la distance entre les axes des pattes du déflecteur et une largeur correspondant à la largeur des pattes du déflecteur.

6. Ensemble diffuseur-déflecteur selon la revendication 4,
**caractérisé en ce que**
la au moins une ouverture (17) est formée par une pluralité de trous traversants dans une zone d'évacuation du corps de base (11) du diffuseur (10), qui présente en particulier une longueur correspondant à la distance entre les axes des pattes du déflecteur et une largeur correspondant à la largeur des pattes du déflecteur.

7. Générateur de gaz (50), en particulier générateur de gaz tubulaire, pour un module airbag avec un boîtier tubulaire (51) et avec un ensemble diffuseur-déflecteur (10) selon l'une des revendications 4 à 6, qui est disposé à une première extrémité du générateur de gaz (50), pour lequel le générateur de gaz (50) est un générateur de gaz pyrotechnique ou un générateur de gaz hybride.

8. Générateur de gaz (50) selon la revendication 7,
**caractérisé en ce que**
un diamètre du générateur de gaz (50) et du diffuseur (10) sont sensiblement égaux, pour lequel le boîtier (51) du générateur de gaz (50) présente notamment à la première extrémité un rétrécissement, dans lequel s'engage un/le rétrécissement (15) du diffuseur (10).

9. Module airbag comprenant un générateur de gaz (50), un coussin gonflable pouvant être gonflé par le générateur de gaz (50) et un dispositif de fixation pour monter le module airbag sur un véhicule,
**caractérisé en ce que**
le générateur de gaz (50) est réalisé selon l'une des revendications 7 à 8.

10. Système de sécurité pour véhicule, en particulier pour la protection d'une personne, par exemple un passager du véhicule ou un passant, avec un générateur de gaz (50), un coussin gonflable par celui-ci, en tant que partie d'un module airbag, et une unité de commande électronique, au moyen de laquelle le générateur de gaz (50) peut être activé en présence d'une situation de déclenchement,
**caractérisé en ce que**
le générateur de gaz (50) est conçu selon l'une des revendications 7 à 8.

11. Procédé de fabrication d'un déflecteur (20) pour un diffuseur d'un générateur de gaz (50), en particulier pour un générateur de gaz tubulaire d'un module airbag, comprenant les étapes suivantes :
a. Préparation d'un corps de base de déflecteur tubulaire (21) avec un diamètre intérieur prédéfini et une première extrémité et une deuxième extrémité,
b. Formage d'un profil dans une section périphérique tubulaire du corps de base du déflecteur (21) au moyen d'un outil de profilage, dans lequel, depuis un côté intérieur du corps de base du déflecteur (21), l'outil de profilage est pressé ou tiré contre la paroi du corps de base du déflecteur (21) dans la direction radiale,
c. Réalisation d'ouvertures de passage dans une zone du profilé ainsi que réalisation d'une découpe en forme d'arc à chacune des extrémités opposées du profilé,
d. découpage du profilé dans la direction axiale à partir d'une première et d'une deuxième extrémité du profilé jusqu'à une longueur prédéterminée avec deux incisions espacées l'une de l'autre, de sorte qu'une patte de déflecteur (29) est créée à chacune des deux extrémités du profilé, et
e. Pliage des deux pattes de déflecteur (29) radialement vers l'intérieur.

12. Procédé selon la revendication 11,
**caractérisé en ce que**
l'outil de profilage est un outil de profilage carré, et/ou les coupes sont disposées sur les bords du profilé, et/ou les pattes de déflecteur (29) sont réglées à un angle de 0° à 35° par rapport à une direction radiale.

13. Procédé de montage d'un déflecteur (20) sur un diffuseur (10) pour un générateur de gaz (50), comprenant les étapes suivantes :
a. Fournir un déflecteur (20) selon l'une quelconque des revendications 1 à 3,
b. Fournir un diffuseur (10) avec un corps de base (11) sensiblement tubulaire avec un axe longitudinal (56), un capuchon déflecteur (12) relié au corps de base (11) à une première extrémité (13) du corps de base (11) et un dispositif de raccordement formé à une deuxième extrémité (14) opposée à la première extrémité (13) du corps de base (11), de préférence sous la forme d'un rétrécissement (15), pour lequel au moins une ouverture (17) est formée dans la paroi du corps de base tubulaire (11),
c. Glisser le déflecteur (20) sur le diffuseur (10), et
d. Orienter le déflecteur (20) par rapport au diffuseur (10), de sorte que le dispositif d'évacuation du gaz (22) du déflecteur (20) soit aligné sur l'au moins une ouverture (17) du diffuseur (10).
